# EUROPEAN PATENT APPLICATION

(11) **EP 4 535 270 A1**
(43) Date of publication of application: **09.04.2025**
(21) Application number: 23815616.0
(22) Date of filing: 20.04.2023
(51) Int. Cl.: G06Q 30/0251

(54) **ADVERTISEMENT MATERIAL ALLOCATION SYSTEM, ADVERTISEMENT MATERIAL ALLOCATION APPARATUS, ADVERTISEMENT MATERIAL ALLOCATION METHOD, AND ADVERTISEMENT MATERIAL ALLOCATION PROGRAM**

(30) Priority: 03.06.2022 JP 2022090751
(71) Applicant: DENTSU INC., Tokyo 105-7001 (JP)
(72) Inventor: KISHIMOTO, Wataru, Tokyo 105-7001 (JP); ARAKAWA, Dai, Tokyo 105-7001 (JP)
(74) Representative: SSM Sandmair
(86) International application number: PCT/JP2023/015786
(87) International publication number: WO 2023/233855

(57) **Abstract**

To implement efficient advertisement allocation to a specific target while suppressing an increase in a calculation amount. An advertisement material allocation system according to one aspect of the present disclosure includes: an acquisition unit configured to acquire setting information on allocation including information on a target value; and a control unit configured to determine, based on the setting information, information indicating a correspondence relationship between each advertisement space and a brand to be allocated to each advertisement space, with respect to which brand advertisement material among a plurality of brands is to be allocated to each advertisement space, in which the control unit determines information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and determines, based on the information indicating the first correspondence relationship, information indicating a second correspondence relationship that minimizes a difference between a maximum value and a minimum value of the achievement rates for all brands under a condition that satisfies a second rule.

## Description

### Technical Field

The present disclosure relates to an advertisement material allocation system, an advertisement material allocation device, an advertisement material allocation method, and an advertisement material allocation program.

### Background Art

In television broadcasting, a commercial (commercial message (CM)) is broadcasted as an advertisement. The CMs are roughly divided into a time CM and a spot CM. The time CM is a CM broadcasted in a space sold and bought integrally with a program, and may be referred to as a program commercial, a program CM, a provided CM, or the like.

The spot CM corresponds to a CM broadcasted in a CM time space set by a television station. The spot CM is divided into a station break (SB) that is broadcasted between programs, a participation (PT) (or a participation CM) that is inserted into a program but does not include a provision display, and the like.

Planning (which may be referred to as advertisement space selection, scheduling, purchase, estimation, spot planning, allocation, or the like) of existing spot CMs has been performed based on a predetermined advertisement placement pattern (for example, Patent Literature 1).

### Citation List

### Patent Literature

Patent Literature 1: JP 2000-124867 A

### Summary of Invention

### Technical Problem

Appealing to a specific target is sufficient for some commodities and services. Here, the target may be a gender/age classification (C (Child) group, T (Teen) group, M (Male) 1-M3 group, F (Female) 1-F3 group) used in the field of marketing.

For such commodities and the like, it is not effective to use an advertisement material targeting all generations. Therefore, it is desirable to introduce an advertisement material for a specific target into a CM. In addition, it is desirable to separately use advertisement materials for a plurality of targets for the same commodity or the like.

However, a suitable method of allocating the advertisement material for the specific target has not yet been established. For example, when the allocation target includes a plurality of brands, if an optimization method is simply applied, there is a possibility that an obtained solution is not appropriate or a calculation amount becomes enormous.

Therefore, an object of the present disclosure is to provide an advertisement material allocation system, an advertisement material allocation device, an advertisement material allocation method, and an advertisement material allocation program capable of realizing efficient advertisement allocation to a specific target while suppressing an increase in a calculation amount.

### Solution to Problem

An advertisement material allocation system according to one aspect of the present disclosure includes: an acquisition unit configured to acquire setting information on allocation including information on a target value; and a control unit configured to determine, based on the setting information, information indicating a correspondence relationship between each advertisement space and a brand to be allocated to each advertisement space, with respect to which brand advertisement material among a plurality of brands is to be allocated to each advertisement space, in which the control unit determines information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and determines, based on the information indicating the first correspondence relationship, information indicating a second correspondence relationship that minimizes a difference between a maximum value and a minimum value of the achievement rates for all brands under a condition that satisfies a second rule.

### Advantageous Effects of Invention

According to one aspect of the present disclosure, it is possible to realize efficient advertisement allocation to a specific target while suppressing an increase in a calculation amount.

### Brief Description of Drawings

Fig. 1 is a diagram illustrating an example of a schematic configuration of an advertisement material allocation system according to an embodiment.
Fig. 2 is a diagram illustrating an example of a flowchart of an advertisement material allocation method according to an embodiment.
Fig. 3 is a diagram illustrating an example of allocation processing in step S104.
Fig. 4 is a diagram illustrating an example of an application result of the advertisement material allocation method according to the embodiment.
Fig. 5 is a diagram illustrating a reference example of the advertisement material allocation method.
Fig. 6 is a diagram illustrating an example of a functional configuration of an allocation device according to an embodiment.
Fig. 7 is a diagram illustrating an example of a hardware configuration of the allocation device or the like according to the embodiment.

### Description of Embodiments

Hereinafter, embodiments of the present disclosure will be described in detail with reference to the accompanying drawings. In the following description, the same parts will be denoted by the same reference numerals. Since the same parts have the same names, functions, and the like, detailed descriptions thereof will not be repeated.

### (Advertisement Material Allocation System)

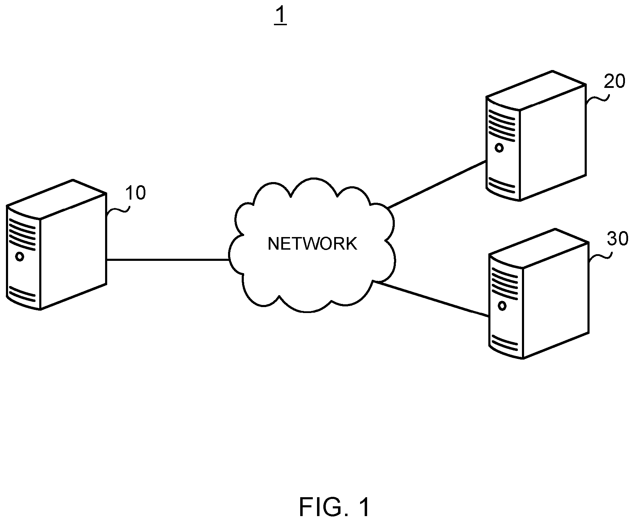

Fig. 1 is a diagram illustrating an example of a schematic configuration of an advertisement material allocation system according to an embodiment. An advertisement material allocation system 1 illustrated in Fig. 1 includes an advertisement material allocation device 10, a broadcasting distribution device 20, and a viewing rate management device 30.

The advertisement material allocation device 10 is a device that allocates a CM to an advertisement space broadcasted using a television or the like for one or a plurality of advertisement brands (which may be replaced with a campaign, a commodity, a service, a material, or the like). Hereinafter, the advertisement material allocation device 10 is also simply referred to as an allocation device 10, or the like.

The allocation device 10 may be a mobile terminal (mobile communication terminal) such as a mobile phone, a smartphone, or a tablet terminal, or may be a fixed communication terminal such as a personal computer (PC) or a server. That is, the allocation device 10 in the present disclosure can be replaced with a communication device.

The allocation device 10 may communicate with a network (such as the Internet) in a wired and/or wireless manner (for example, long term evolution (LTE), 5^{th} generation new radio (5G NR), Wi-Fi (registered trademark), or the like).

The broadcasting distribution device 20 is a device that distributes broadcasting to a television (TV). Here, the television (television receiver) may be a device having a function of receiving at least one of terrestrial broadcasting, broadcasting by broadcasting satellite (BS)/communications satellite (CS), Internet broadcasting (Internet television), and the like. For example, the television may be at least one of a multi-function television, a smart TV, an Internet protocol (IP) TV, a set-top box, the above-described mobile terminal, the above-described fixed communication terminal, and the like.

Note that broadcasting means transmission of electric communication intended to be directly received by the public, and may include wireless broadcast, Internet broadcast, and the like.

The viewing rate management device 30 is a device that aggregates actual viewing rates of programs broadcasted on televisions. The viewing rate may be stored in a predetermined time unit (for example, seconds, minutes, and hours). The viewing rate management device 30 may transmit information regarding viewing rates to other devices (for example, the allocation device 10) via a network.

The viewing rate management device 30 may be, for example, a device managed by a television viewing rate researcher. The viewing rate management device 30 may acquire and manage data of a viewing history from a measuring device connected to a television of a predetermined household (for example, a research cooperation household). Note that the viewing rate may be calculated or predicted from the data.

In the viewing rate management device 30, the viewing rate (individual viewing rate of a target) for each predetermined target (a user corresponding to a predetermined attribute) may be stored.

The viewing rate or the predicted viewing rate may include, for example, a viewing rate or a predicted viewing rate related to at least one of a target rating point (TRP) corresponding to a total of individual viewing rates of a target group and a gross rating point (GRP) corresponding to a total of household viewing rates. The predicted viewing rate may be derived by the allocation device 10 or the viewing rate management device 30 based on at least one of a past viewing rate, a real-time viewing rate, information regarding a program, and the like. Furthermore, the predicted viewing rate may include an individual overall viewing rate and a viewing rate predicted for a viewing rate obtained by adding the real-time viewing and the time shift viewing up to the seventh day after broadcasting (which may be referred to as All, program + commercial 7 (P+C7), or the like). Note that an individual viewing rate of a target may mean a ratio of viewers of a certain target group to the total number of individuals corresponding to the target group.

In the present disclosure, the target is assumed to be gender/age classification (a C (Child) group, a T (Teen) group, an M (Male) 1-M3 group, and an F (Female) 1-F3 group) used in the field of marketing, but the present disclosure is not limited to such classification.

An example of a functional configuration and a hardware configuration of each device such as the allocation device 10 will be described later.

Note that the system configuration is an example, and the present disclosure is not limited thereto. For example, one device is included for each type of device in Fig. 1, but the number of devices is not limited thereto, and a plurality of devices may be provided. The advertisement material allocation system 1 may be configured not to include some devices, or may be configured such that a function of one device is implemented by a plurality of devices.

The functions of a plurality of devices may be implemented by one device. For example, at least two of the allocation device 10, the broadcasting distribution device 20, and the viewing rate management device 30 may be implemented on one server.

### (Advertisement Material Allocation Method)

An advertisement material allocation method according to the embodiment of the present disclosure will be described below. Each advertisement material allocation method may be applied to the advertisement material allocation system described above. Note that contents of the present disclosure may be used for advertisement material planning, and in the present disclosure, "allocation", "planning", "scheduling", "optimization", and the like may be replaced with each other.

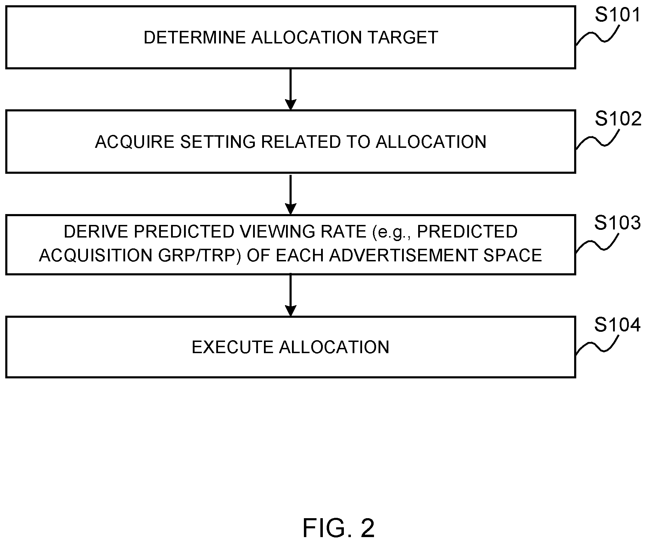

Fig. 2 is a diagram illustrating an example of a flowchart of the advertisement material allocation method according to the embodiment.

In step S101, the allocation device 10 determines a brand as an advertisement material allocation target. The allocation device 10 may determine the brand based on an input from the outside (for example, setting by a user and reception from another device). The allocation target may include a plurality of brands. The allocation target may be brands of a single (one company) advertiser or brands of a plurality of advertisers.

In step S102, the allocation device 10 acquires setting related to allocation (which may be referred to as setting information). The allocation device 10 may acquire the setting based on an input from the outside. The setting may include information (for example, information on first/second/third rules) used in step S104 to be described later, or may include information on an allocation constraint regarding each advertisement space (such as a prohibited condition regarding each target).

For example, a specific value/a piece of specific information regarding the first/second/third rules may be displayed to be selectable (by a check box or the like) in a user interface for inputting setting information, and the allocation device 10 may determine the above-described value/information based on selection of the user interface.

Here, the setting information may include information on the advertisement to be allocated (which may be referred to as advertisement information, CM information, or the like). The advertisement information may include information related to contents of the advertisement, and may indicate, for example, a content (for example, whether the content relates to a medical field, a gamble, a financial field, an alcohol item, a tobacco item, or the like) of a commodity or a service of an advertisement target.

Furthermore, the advertisement information may include information on whether the advertisement of the brand is a time CM or a spot CM. The advertisement information may include information on whether the advertisement of the brand is SB or PT.

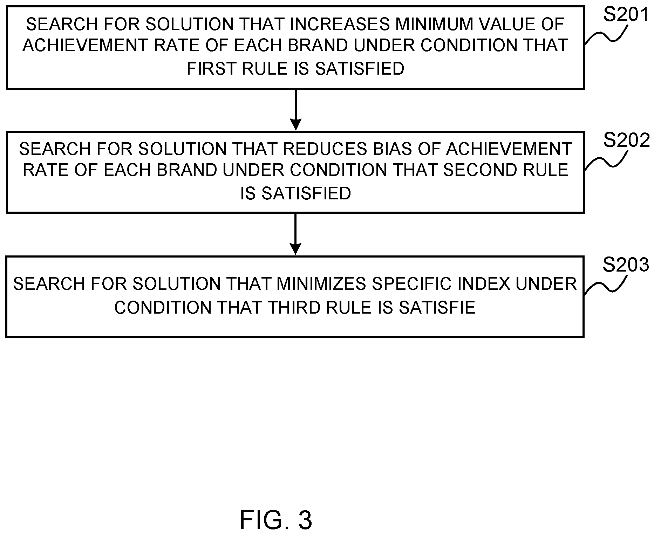

Furthermore, the advertisement information may include information on an advertisement placement pattern (for example, an inverted L type, a whole day type, a figure 3 type, a backward C type, an inverted F type, a midnight type, an all-day daytime type, and the like) allowed by the brand.

The setting information may include information on a program of each advertisement space (which may be referred to as program information) in an advertisement allocation target period (for example, one month) of a certain brand. The program information may include, for example, a broadcasting date and time (may include a start time, an end time, a day of the week, a time length of the program, and the like), a time rank (a rank of a CM fee), a genre of the program, information on a content of the program, a keyword related to the program, a predicted viewing rate of the program, and the like.

The genre of the program may be, for example, news, variety show, drama, movie, music, sports, and the like. The predicted viewing rate may include a predicted viewing rate (or an estimated viewing rate) calculated based on at least one of a real-time viewing rate and a time shift viewing rate.

Regarding a constraint, the allocation device 10 may determine whether a certain brand can acquire a certain advertisement space (whether an advertisement of the certain brand may be allocated to the certain advertisement space) based on at least one of the following items indicated by the above-described setting information:
· whether the advertisement space is a spot space;
· when the advertisement space is a spot space, whether the advertisement is SB or PT;
· whether the advertisement space is a time space;
· a program corresponding to the advertisement space;
· a genre of the program corresponding to the advertisement space;
· the number of advertisement spaces that are acquired within a certain period (for example, same day, same month, brand period) for a program corresponding to the advertisement space;
· a broadcasting station corresponding to the advertisement space;
· the day of the week and/or the time zone of the advertisement space;
· whether a space adjacent to the advertisement space has been acquired;
· whether an advertisement space of the same genre as the brand is acquired in the same space as the advertisement space; and
· whether the advertisement space is a space designated as unavailable for the brand (an advertiser and a client of the brand).

In other words, the allocation device 10 may assume that an advertisement space in which at least one of the above-described conditions matches (or does not match) setting of the brand is prohibited from being acquired (unavailable) for the brand. The above-described conditions may be referred to as prohibited conditions or the like. The day of the week and/or the time zone in which the advertisement space cannot be acquired may be referred to as a prohibited time.

The allocation device 10 may derive the prohibited time based on the advertisement placement pattern. Examples of the placement pattern include an inverted L type, a whole day type, a figure 3 type, a backward C type, an inverted F type, a midnight type, an all-day daytime type, and the like. The allocation device 10 may determine that time corresponding to the inverted L type is the prohibited time for the brand in which the placement pattern of the inverted L type is set as an acquisition prohibition space. Note that, in the present disclosure, the advertisement placement pattern may be replaced with a placement pattern, a deploy pattern, an advertisement pattern, a sales pattern, or the like.

In step S103, the allocation device 10 derives a predicted viewing rate (predicted acquisition GRP, predicted acquisition TRP for each target, and the like) of each advertisement space in the advertisement allocation target period (for example, one month) of a certain brand. In the derivation, past viewing rate data (for example, individual viewing rate data for each target) stored in the viewing rate management device 30 may be used. For example, the allocation device 10 may generate a GRP/TRP prediction model using an analysis method such as deep learning or regression analysis from the past viewing rate data, and may input program information or the like corresponding to each advertisement space to the model, thereby deriving the predicted acquisition GRP/TRP.

Note that the allocation device 10 may acquire information on the predicted viewing rate of each advertisement space based on an input from the outside. The information on the predicted viewing rate of each advertisement space may be included in the setting information on the above-described allocation.

Note that, in the present disclosure, the predicted acquisition GRP/TRP, the acquisition GRP/TRP, the prediction GRP/TRP, the estimation GRP/TRP, and the like may be replaced with each other.

In the present disclosure, the advertisement space to be allocated is assumed to be a space corresponding to a certain period (for example, an advertisement allocation target period of a brand) of a plurality of broadcasting stations (which may be replaced with channels), but one broadcasting station may be a target. Note that, in the present disclosure, an advertisement space, a space, a time zone, a zone, and the like may be replaced with each other.

In step S104, the allocation device 10 allocates an advertisement material of each brand based on the setting related to the allocation in S102, the acquisition GRP/TRP for each space in S103, and the like.

In the allocation, the allocation device 10 defines a combination optimization problem (for example, a linear programming problem) related to advertisement allocation, and obtains a solution using an optimization method. Here, the solution corresponds to allocation of which brand to which advertisement space of the allocation target. The solution may correspond to information indicating a correspondence relationship between all allocation target advertisement spaces and the brands allocated to the respective advertisement spaces.

A branch limitation method, a dynamic programming method, or the like may be used as the optimization method. For the optimization, a learning model generated based on at least one of deep learning, reinforcement learning, machine learning, and the like may be used.

Fig. 3 is a diagram illustrating an example of allocation processing in step S104. In the allocation described in the present disclosure, it is possible to appropriately calculate an optimum solution desired by an advertiser while suppressing an increase in calculation amount by performing a plurality of stages of optimization steps.

Hereinafter, max(...) may be a function that returns a maximum value of a variable in the parentheses, and min(...) may be a function that returns a minimum value of a variable in the parentheses.

Note that, in the search for the solution in each step, the allocation device 10 may determine whether the advertisement of a certain brand can be allocated to the specific advertisement space based on the constraint described above.

### <Step S201>

In step S201, the allocation device 10 searches for (derives) a solution that increases the minimum value of the achievement rate of each brand under a condition that a first rule is satisfied. The first rule may be referred to as a compliance rule, a priority rule, or the like.

Among N brands to be optimized, when the achievement rate of the i-th brand (i is an integer. i=1, 2,..., N) is set to Brandᵢ, an optimization problem in step S201 may correspond to a problem of maximizing min(Brand₁,..., Brand_{N}) under a condition corresponding to the first rule.

The Brandᵢ may correspond to a ratio of a certain index of an i-th brand to a target value (that is, an estimation value of a certain index ÷ a target value). Note that, in the present disclosure, the index may correspond to at least one of TRP, GRP (household GRP, individual GRP), reach, frequency, amount of money, and the like.

Furthermore, the estimation value of a certain index for a certain brand (for example, the estimation TRP when the index is TRP) may be a value of the index that is expected to be acquired when advertisement allocation corresponding to the solution in the current step is performed for the brand (the sum of the estimation values of the index for all acquired advertisement spaces).

The first rule may include one or more of the following rules for the i-th brand:
· a certain index is equal to or greater than a target value (alternatively, the index is included in the target value ± an allowable range);
· the achievement rate of which index is to be set as a target of solution search (which index has Brandᵢ as the achievement rate, and which index is to be optimized);
· an advertisement is always allocated to one or more advertisement spaces in each specific time unit (for example, one day) of a date and time (for example, all days) satisfying a specific condition within a period to be optimized;
· the number of the same program for SB/PT is equal to or less than a specific number (for example, 1, 2,...);
· the target achievement rate of Brandᵢ (hereinafter, also referred to as achievement rate by period) for a specific period of time (or up to a certain period of time) is equal to or greater than a specific value; and
· a difference between a maximum value and a minimum value of a specific achievement rate by period is within a specific value.

The first rule may include the above-described rule "a certain index is equal to or greater than a target value (alternatively, the index is included in the target value ± an allowable range)" for each of the plurality of indexes. The allowable range may be different for each index.

When the above-described rule "the achievement rate of which index is to be set as a target of solution search" indicates, for example, TRP, the allocation device 10 can determine that Brandᵢ is a ratio of TRP (total acquisition TRP) of the i-th brand to a target value (target TRP) even when a plurality of target values (for example, a target TRP that is a target value of TRP and a target GRP that is a target value of GRP) are given for each brand.

Note that, when the above-described rule "the achievement rate of which index is to be set as a target of solution search" is not particularly specified, the allocation device 10 may determine a specific index (for example, TRP) as an optimization target.

The above-described specific period may be a part or all of the period to be optimized. In addition, the first rule may include a rule regarding a plurality of achievement rates by period for different periods.

The first rule may include different first rules for each of the plurality of brands. For example, the above-described target values of the plurality of brands may be different from each other. When there is a plurality of "i-th brands", the description of the "i-th brand" of the present disclosure may mean the description of each of the plurality of i-th brands. The "i-th brand" of the present disclosure may be replaced with any brand included in the brand to be optimized.

The first rule may include one or more of the following plurality of rules across a plurality of brands:
· a difference between a maximum value of an achievement rate by period of a certain brand and a minimum value of an achievement rate by period of another brand is within a specific value; and
· for a certain target, the order of estimated target content rates of a plurality of brands is the desired order.

In the present disclosure, a target content rate for a certain brand may be calculated by TRP ÷ GRP for the brand. Note that a target content rate for an estimation value (also referred to as an estimated target content rate) may be calculated by estimation TRP ÷ estimation GRP. In addition, a target content rate for a target value (also referred to as a targeted target content rate) may be calculated by target TRP ÷ target GRP.

Here, the rule "for a certain target, the order of estimated target content rates of a plurality of brands is the desired order" may be, for example, a condition that the order (ranking) of the estimated target content rates of brands 1 to 3 in an F1 group is the brand 2 being in the first place, the brand 1 being in the second place, and the brand 3 being in the third place. When the brand to be optimized includes a plurality of targets, the above-described desired order (desired ranking) may be set/specified for each target.

Note that the allocation device 10 may determine the above-described desired ranking by the targeted target content rate of each brand for the same target, and then, the above-described desired ranking may not be explicitly set/pointed out.

Note that information (setting) on the first rule may be input to the allocation device 10 by a user, or may be received (notified) from the outside. For example, information related to at least one of the target value, the allowable range, the specific condition, the specific time unit, the specific number, the specific value, and the specific period described above, and X to be described later, and the like may be included in the setting related to the allocation in step S102 described above.

When a branch limitation method is used as the optimization method, the allocation device 10 first determines a provisional solution that satisfies the first rule based on a predetermined method (for example, a greedy algorithm), performs a branch operation, a limitation operation, and the like, updates the provisional solution that satisfies the first rule based on any method (for example, the greedy algorithm), and terminates a search operation when there is no more searchable branch. The provisional solution here corresponds to the obtained optimum solution. Note that, in determining (calculating) the first provisional solution, some of the first rules may be ignored for simplification of calculation. Note that, in steps S202 and S203, similar optimization processing may be performed for the first/second/third rules.

When a solution is found in step S201, the allocation device 10 proceeds to step S202. In addition, when the solution is not found in step S201 (no provisional solution satisfying all specified first rules was found, or min(Brand₁,..., Brand_{N}) was not equal to or greater than a predetermined threshold value), the allocation device 10 may alleviate the first rule and search for the solution again. For example, the allocation device 10 may perform the first step S201 by setting the above-described specific value of the achievement rate by period to 1 (or 100%), reduce the above-described specific value by X% (for example, X = 5) when the solution is not found, and perform step S201, and may repeatedly perform the above procedure until the solution is found.

### <Step S202>

In step S202, the allocation device 10 searches for a solution that reduces a bias of the achievement rate of each brand (a difference between the maximum and the minimum, the maximum being an achievement rate of a brand A and the minimum being an achievement rate of a brand B, among the plurality of brands) under the condition that the second rule is satisfied in addition to or instead of the first rule.

The optimization problem in step S202 may correspond to a problem of minimizing max(Brand₁,..., Brand_{N})-min(bBrand₁,..., Brand_{N}) under the conditions corresponding to the first rule and the second rule.

An initial value (provisional solution) of the optimization problem in step S202 may be the solution found in step S201.

The second rule may include one or more of the following rules:
· the achievement rate of the i-th brand is equal to or greater than a minimum value (alternatively, the minimum value * coefficient) of the achievement rate of the i-th brand in the solution found in step S201;
· the minimum value of the achievement rates of all brands is equal to or greater than a minimum value (alternatively, the minimum value * coefficient) of the achievement rates of all brands in the solution found in step S201; and
· the specific achievement rate by period of the i-th brand is equal to or greater than a specific achievement rate by period (alternatively, the specific achievement rate by period * coefficient) of the i-th brand in the solution found in step S201.

The above-described coefficient may be a value equal to or less than 1 (for example, 0.9), and corresponds to a value that allows decrease of the minimum value of the above-described achievement rate to reduce the bias of the above-described achievement rate.

Note that the information (setting) indicating the second rule may be input to the allocation device 10 by a user, or may be received (notified) from the outside. For example, the information regarding at least one of the above-described coefficient and Y to be described later may be included in the setting regarding the allocation in step S102 described above. For example, whether to set the above-described coefficient to a value equal to or less than 1 may be displayed in a selectable manner (by a check box or the like) in a user interface for inputting setting information in step S102, and the allocation device 10 may determine the value of the above-described coefficient based on selection of the user interface.

When the solution is found in step S202, the allocation device 10 proceeds to step S203. In addition, when the solution is not found in step S202 (no provisional solution satisfying all specified first/second rules was found, or max(Brand₁,..., Brand_{N}) - min(Brand₁,..., Brand_{N}) was not equal to or less than the predetermined threshold value), the allocation device 10 may alleviate the second rule and search for the solution again. For example, the allocation device 10 may perform the first step S202 by setting the value of the above-described coefficient for the achievement rate to 1, reduce the value of the above-described coefficient by Y% (for example, Y = 10) when the solution is not found, and perform step S202, and may repeatedly perform the above procedure until the solution is found.

In addition, when the solution is not found in step S202 (no provisional solution satisfying all specified first/second rules was found, or max(Brand₁,..., Brand_{N})-min(Brand₁,..., Brand_{N}) was not equal to or less than the predetermined threshold value), the allocation device 10 may return to step S201, alleviate the first rule, and search for the solution again. For example, when the solution is not found in step S202, the allocation device 10 may return to step S201, lower the above-described specific value for the achievement rate by period by X% (for example, X = 5), and perform step S201.

### <Step S203>

In step S203, the allocation device 10 searches for a solution that minimizes a specific index (one or more indexes below) under a condition that a third rule is satisfied in addition to or instead of the second rule:
· a difference (or an absolute value of the difference) between the estimation TRP for the i-th brand (in the solution searched in step S203) and the estimation TRP for the i-th brand in the solution found in step S202;
· a variation in the number of advertisement spaces (the number of advertisements) allocated to the i-th brand per day; and
· the number of consecutive allocation spaces to temporally adjacent programs for the i-th brand.

The small variation in the number of advertisement spaces per day means that the advertisement is prevented from being intensively allocated to a specific day, thus improvement of an advertisement effect can be expected.

An initial value (provisional solution) of the optimization problem in step S203 may be the solution found in step S202.

Note that, when the specific index includes the plurality of indexes described above in step 203, when all indexes cannot be minimized, any index may be compromised. For example, the minimum value of the absolute value of the above-described difference is 0, but may be allowed to be equal to or less than a certain value (for example, 0.5, 1, 2,...). For example, the minimum value of the above-described variation/the number of consecutive allocation spaces is 0, but may be allowed to be 1 (or 2, 3,...).

The third rule may include one or more of the following rules:
· the achievement rate of the i-th brand is equal to or greater than the minimum value of the achievement rate of the i-th brand in the solution found in step S202;
· the minimum value of the achievement rates of all brands is equal to or greater than the minimum value (alternatively, the minimum value * coefficient) of the achievement rates of all brands in the solution found in step S202; and
· the specific achievement rate by period of the i-th brand is equal to or greater than the specific achievement rate by period of the i-th brand in the solution found in step S202.

When the solution is found in step S203, the allocation device 10 determines that the optimum solution is found and ends the allocation processing. In step S203, there is no chance that the solution is not found (as the solution in step S202 is obtained at worst).

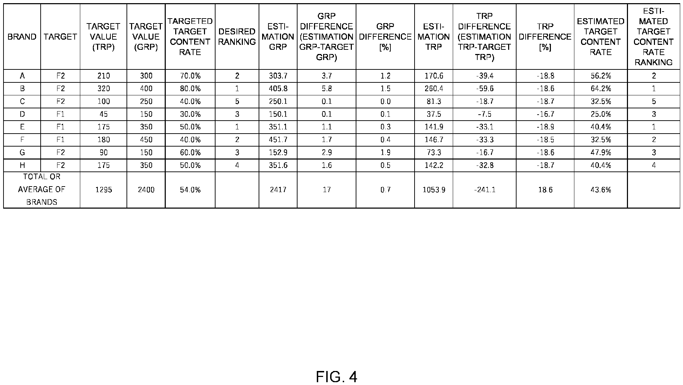

Fig. 4 is a diagram illustrating an example of an application result of the advertisement material allocation method according to the embodiment. The illustrated "desired ranking" and the column on the left of the "desired ranking" correspond to information given to the allocation device 10 (information available for optimization), and the column on the right of the "desired ranking" corresponds to an index of a result of completion of the optimization in step S203 of Fig. 3.

In the present example, a certain period of advertisement allocation is performed for eight brands (brands A to H). The target of the brands A to C and G to H is F2 and the target of the brands D to F is F1.

In the present example, it is assumed that the allocation device 10 has been given the target TRP and the target GRP of each brand. Note that the illustrated targeted target content rate is the target TRP/target GRP [%], and the desired ranking corresponds to ranking in which the targeted target content rates for the respective targets are arranged in descending order.

In the present example, the achievement rate of the brand corresponds to the TRP. That is, what is maximized in step S201 is the minimum value of the achievement rate of the TRP of each brand. The target GRP is used as a constraint condition of the first rule.

As a result of the allocation, GRP differences that are estimation GRP - target GRP (and a percentage value of the GRP difference (= GRP difference ÷ target GRP × 100)) are all equal to or less than 0, that is, all estimation GRPs of the respective brands achieves the target.

As a result of the allocation, the percentage value of the TRP difference that is the estimation TRP - target TRP (= TRP difference ÷ target TRP × 100) falls within a range of -18.9% to -16.7%, and it can be seen that the bias of the achievement rate of each brand is suitably reduced in step S202.

As a result of the allocation, it can be seen that the estimated target content rate ranking matches the desired ranking, and the ratio of TRP/GRP of each brand desired by an advertiser is appropriately reflected.

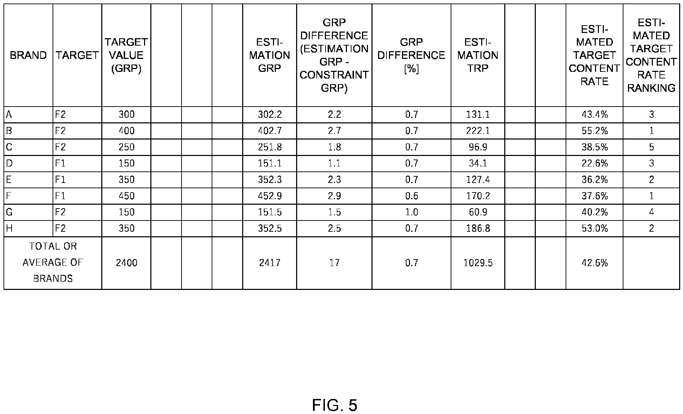

Fig. 5 is a diagram illustrating a reference example of the advertisement material allocation method. The example is an example of using an optimization method of simply making the GRP for each brand equal to or greater than the target GRP instead of allocation using a multi-stage optimization method of Figs. 2 and 3, and the target TRP, the desired ranking, and the like are not considered (cannot be considered).

As a result of the allocation, all estimation GRPs of the respective brands have achieved the goals, but there are considerable differences in the estimation TRPs. Assuming that the target TRP is the same as that in Fig. 4, the bias of the achievement rate of each brand is larger than that in Fig. 4.

In addition, when the desired ranking is the same as that in Fig. 4, the estimated target content rate ranking does not match the desired ranking.

Referring to Figs. 4 and 5, it can be seen that allocation using the multi-stage optimization method of the present disclosure is preferable because the allocation desired by the advertiser can be appropriately performed. Allocation using the multi-stage optimization method of the present disclosure is more advantageous than an existing system (for example, an allocation device/system that adopts allocation that collectively performs optimization) in terms of performance (target to be achieved) and processing load.

According to the embodiment described above, a preferable advertisement allocation can be suitably determined with a lower processing load than that of a case in which the same solution (advertisement allocation) is obtained using the existing system. In addition, according to the embodiment, even when a solution cannot be obtained under the initial condition, the allocation device 10 can automatically alleviate some conditions and attempt optimization, thereby making it possible to effectively prevent a situation in which there is no solution.

### <Supplement>

A description has been given as to an example in which the advertisement material allocation described in the above embodiment is applied to the television CM, but the present disclosure is not limited thereto. The above-described embodiment of the present disclosure may be applied to, for example, a radio CM, an Internet distribution CM, and the like. A person skilled in the art can replace and understand the description of the above embodiment as necessary. For example, when the advertisement material allocation is applied to the radio CM, the viewing rate of the present disclosure may be replaced with a listening rate.

Similar to the prohibited condition, the prohibited time, and the like described in the above-described embodiments, a condition (acquirable condition), a time (acquirable time), and the like that an advertisement space, at least one of the conditions of which matches (or does not match) setting of a campaign, is assumed to be acquirable for the campaign may be set for the allocation device 10. A person skilled in the art can also implement an aspect in which the above-described prohibited condition/the prohibited time is replaced with the acquirable condition/the acquirable time, and the acquirable condition/the acquirable time is introduced based on a content in which non-acquirable and acquirable are appropriately replaced with each other.

The "viewing rate", "GRP", "TRP", "viewing rate amount", and the like of the present disclosure may be replaced with each other or may be replaced with another index related to the viewing rate or the total viewing rate.

Note that the present disclosure also covers a content in which the "viewing rate" is replaced with a specific index (or a degree of improvement, an offset, and the like in a specific index). The specific index may be an index for determining an advertisement effect, an intermediate index for improving key performance indicators (KPIs) of an advertiser, or the like, and may include, for example, a recognition rate, reach, return on advertising spend (ROAS), return on investment (ROI), or the like. At least a part of the description "viewing rate" may be replaced with any of the above-described specific indices.

The "index" in the present disclosure may be replaced with at least one of the following items:
(1) currency data in an advertisement transaction (for example, household GRP, ALL, P+C7, and the like);
(2) a target individual viewing rate (or TRP);
(3) a viewing rate amount in a specific user segment (for example, a viewing rate amount of a consumer who frequently visits an advertiser's site, a viewing rate of a consumer who frequently searches for a specific commodity, and a viewing rate of a consumer who visits a specific store); and
(4) a predicted advertisement effect (for example, cost per mille (CPM), cost per action (CPA), cost per install (CPI), and the like).

The user segment of the above-described item (3) may be derived from the viewing history (for example, provided from the viewing rate management device 30) and data of the data management platform (DMP). The allocation device 10 may acquire information on the viewing rate of a certain user segment from the viewing rate management device 30. The user's action data/position information for deriving the user segment may be transmitted from the mobile communication terminal to the DMP device and used for analysis.

The allocation device 10 may use (consider) whether advertisement drop balance is satisfied in the optimization as the first/second/third rules. The advertisement drop balance may be specified for each specific period unit (weeks, days, hours, and the like) and for each specific index (for example, GRP and TRP). The advertisement drop balance may be determined based on a moment at which a consumer wants a commodity or a service.

For example, regarding advertisement allocation of a product brand, the demand of which increases on a sunny day, an advertisement drop GRP balance specified value specified for each day may be applied to flow more CMs on a sunny day and not to flow CMs as much as possible on a rainy day in conjunction with a weather forecast. For example, the allocation device 10 may perform allocation by setting the number of advertisement spaces allocated on the day on which the advertisement drop GRP balance specified value = 0.5 is set to half the number of advertisement spaces allocated on the day on which the advertisement drop GRP balance specified value = 1 is set.

Furthermore, the advertisement drop GRP balance specified value in conjunction with an acquisition status (or stock) of an advertisement space of a brand, a production status (supply status) of a commodity corresponding to the brand, an emotional state of a consumer, and the like may be set in the allocation device 10.

### (Device Configuration)

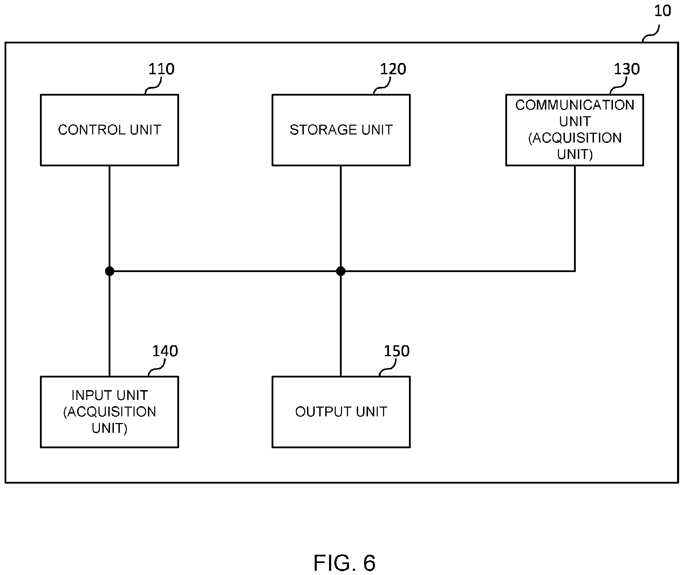

Fig. 6 is a diagram illustrating an example of a functional configuration of the allocation device according to the embodiment. As illustrated in the present example, the allocation device 10 includes a control unit 110, a storage unit 120, a communication unit 130, an input unit 140, and an output unit 150. Note that, in the present example, functional blocks of a characteristic portion in the present embodiment are mainly illustrated, and the allocation device 10 may also include other functional blocks necessary for other processing. In addition, a configuration not including some functional blocks may be employed.

The control unit 110 controls the allocation device 10. The control unit 110 can be configured with a controller, a control circuit, or a control device described based on common recognition in the technical field according to the present disclosure.

The storage unit 120 stores (holds) information used in the allocation device 10. The storage unit 120 can be configured with, for example, a memory, a storage, a storage device, and the like described based on common recognition in the technical field according to the present disclosure.

The communication unit 130 communicates with another communication device (a device, a server, and the like) via a network. The communication unit 130 may output various types of received information to the control unit 110.

The communication unit 130 can be configured with a transmitter/receiver, a transmission/reception circuit, or a transmission/reception device described based on common recognition in the technical field according to the present disclosure. Note that the communication unit 130 may include a transmission unit and a reception unit.

The input unit 140 receives an input by an operation from a user. Furthermore, the input unit 140 may be connected to a predetermined device, storage medium, or the like and may receive an input of data. The input unit 140 may output, for example, an input result to the control unit 110.

The input unit 140 can be configured with an input device such as a keyboard, a mouse, and a button, an input/output terminal, an input/output circuit, and the like described based on common recognition in the technical field according to the present disclosure. Furthermore, the input unit 140 may have a configuration integrated with a display unit (for example, a touch panel).

The output unit 150 outputs data, contents, and the like in a format perceptible to a user. For example, the output unit 150 may include a display unit that displays an image, a voice output unit that outputs a voice, and the like.

The display unit can include, for example, a display device such as a display, a monitor, or the like described based on common recognition in the technical field according to the present disclosure. Furthermore, the voice output unit can include an output device such as a speaker or the like described based on common recognition in the technical field according to the present disclosure.

The output unit 150 can include, for example, an arithmetic unit, an arithmetic circuit, an arithmetic device, a player, an image/video/audio processing circuit, an image/video/audio processing device, an amplifier, and the like described based on common recognition in the technical field according to the present disclosure.

Note that any one of or a combination of the communication unit 130, the input unit 140, and the control unit 110 may be referred to as an acquisition unit. The acquisition unit may acquire (receive, generate, derive) setting information related to allocation.

The control unit 110 may perform processing based on the steps illustrated in Figs. 2 and 3. For example, the control unit 110 may determine, based on the setting information, an advertisement material of which brand among a plurality of brands is to be allocated to each advertisement space. For example, under the condition that the first rule is satisfied, the control unit 110 may determine a first allocation (advertisement allocation corresponding to the solution in step S201 described above) that maximizes the minimum value for all brands among the achievement rates regarding the specific index (for example, TRP) for each brand. Under the condition that the second rule is satisfied, the control unit 110 may determine (after determining the first allocation or based on a solution relating to the first allocation), based on the first allocation, a second allocation (advertisement allocation corresponding to the solution in step S202 described above) that minimizes a difference between the maximum value and the minimum value of the achievement rates for all brands.

The specific index may be the target rating point (TRP), and the first rule may include a constraint that the gross rating point (GRP) or the individual GRP is equal to or greater than a target value.

The second rule may include a constraint that the minimum value of the achievement rates for all brands in the second allocation is equal to or greater than the minimum value of the achievement rates for all brands in the first allocation.

Under the condition that the third rule is satisfied, the control unit 110 may determine, for a specific brand, a third allocation (advertisement allocation corresponding to the solution in step S203 described above) that minimizes at least one of a variation in the number of allocated advertisement spaces per day and the number of consecutive allocation spaces to temporally adjacent programs based on the second allocation.

Note that the communication unit 130 may transmit allocation information corresponding to the first allocation/the second allocation/the third allocation (for example, information indicating a correspondence relationship between all advertisement spaces to be allocated and the brands allocated to the respective advertisement spaces) to the broadcasting distribution device 20, and may cause CM broadcasting according to the allocation of the present disclosure to be performed.

The broadcasting distribution device 20, the viewing rate management device 30, and the like may have the same configuration as that of Fig. 6. A person skilled in the art can appropriately replace and understand the description related to the allocation device 10 in the description of Fig. 6.

Some parts will be exemplarily described below. Note that the reference sign of each device corresponding to each functional block in Fig. 6 is represented by applying a first single-digit number of the reference sign indicating each device (for example, in the case of the broadcasting distribution device 20, "2" that is the first single digit of "20" is used) to the first single-digit number in Fig. 6.

A communication unit 230 of the broadcasting distribution device 20 may receive allocation information corresponding to the first allocation/the second allocation/the third allocation from the allocation device 10. A control unit 210 of the broadcasting distribution device 20 may determine a CM to be broadcasted in a predetermined time zone based on the above-described allocation information. The communication unit 230 of the broadcasting distribution device 20 may distribute (transmit) the CM.

A control unit 310 of the viewing rate management device 30 may derive information on the viewing rate, the TRP, and the like based on a viewing log of a television (not illustrated) and the like, and may transmit the information to the allocation device 10.

### (Hardware Configuration)

Note that the block diagrams used in the description of the above embodiments illustrate blocks in units of functions. These functional blocks (components) are implemented by any combination of hardware and/or software. In addition, means for implementing each functional block is not particularly limited. That is, each functional block may be implemented by one physically coupled device, or may be implemented by a plurality of devices in which two or more physically separated devices are connected to each other in a wired or wireless manner.

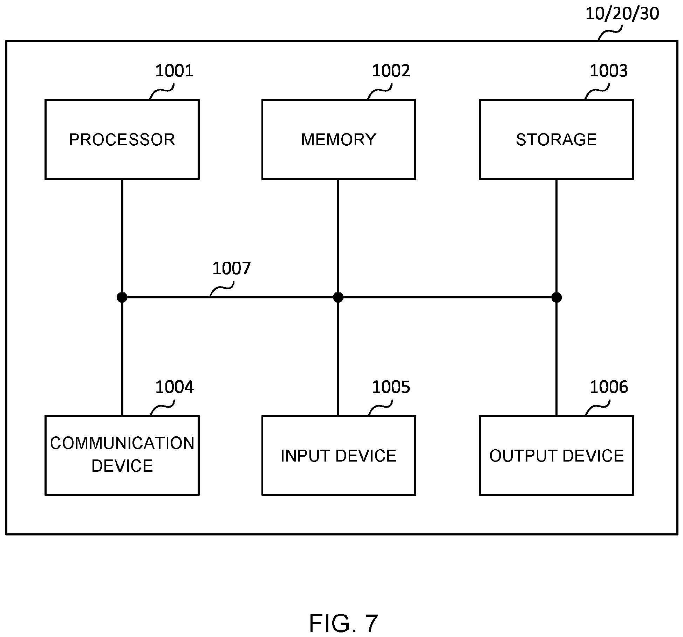

For example, a device (such as the allocation device 10) in the embodiment of the present disclosure may function as a computer that performs processing of the advertisement material allocation method of the present disclosure. Fig. 7 is a diagram illustrating an example of a hardware configuration of the allocation device or the like according to the embodiment. The allocation device 10, the broadcasting distribution device 20, and the like described above may be physically configured as a computer device including a processor 1001, a memory 1002, a storage 1003, a communication device 1004, an input device 1005, an output device 1006, a bus 1007, and the like.

Note that, in the present disclosure, an apparatus, a circuit, a device, a unit, a server, and the like can be replaced with each other. The hardware configuration of the allocation device 10, the broadcasting distribution device 20, and the like may be configured to include one or a plurality of each device illustrated in the drawing, or may be configured without including some devices.

For example, although only one processor 1001 is shown, there may be plural processors. Furthermore, the processing may be executed by one processor, or various types of processing may be executed simultaneously, sequentially, or using other methods by two or more processors. Note that the processor 1001 may be implemented by one or more chips.

Each function in the allocation device 10, the broadcasting distribution device 20, and the like is implemented by causing predetermined software (program) to be loaded on hardware such as the processor 1001 and the memory 1002, so that the processor 1001 performs an arithmetic operation, and controls communication by the communication device 1004, reading and/or writing of data in the memory 1002 and the storage 1003, and the like.

The processor 1001 operates, for example, an operating system to control the entire computer. The processor 1001 may be configured with a central processing unit (CPU) including an interface with a peripheral device, a control device, an arithmetic device, a register, and the like. Note that each unit such as the above-described control unit 110 may be implemented by the processor 1001.

In addition, the processor 1001 reads a program (a program code), a software module, data, and the like from at least one of the storage 1003 and the communication device 1004 to the memory 1002, and executes various types of processing according to the data. As the program, a program that causes a computer to execute at least a part of the operations described in the above-described embodiments is used. For example, the control unit 110 may be implemented by a control program stored in the memory 1002 and operated in the processor 1001, and other functional blocks may be similarly implemented.

The memory 1002 is a computer-readable storage medium, and may include, for example, at least one of a read only memory (ROM), an erasable programmable ROM (EPROM), an electrically EPROM (EEPROM), a random access memory (RAM), or another appropriate storage medium. The memory 1002 may be referred to as a register, a cache, a main memory (main storage device), or the like. The memory 1002 may store a program (a program code), a software module, and the like that can be executed to implement the method according to the embodiment.

The storage 1003 is a computer-readable storage medium, and may be configured with, for example, at least one of a flexible disk, a floppy (registered trademark) disk, a magneto-optical disk (for example, a compact disc (such as a compact disc ROM (CD-ROM)), a digital versatile disc, or a Blu-ray (registered trademark) disc), a removable disk, a hard disk drive, a smart card, a flash memory device (for example, a card, a stick, or a key drive), a magnetic stripe, a database, a server, or another appropriate storage medium. The storage 1003 may be referred to as an auxiliary storage device. Note that the above-described storage unit 120 may be implemented by the memory 1002 and/or the storage 1003.

The communication device 1004 is hardware (transmission/reception device) for performing communication between computers via at least one of a wired network and a wireless network, and is also referred to as, for example, a network device, a network controller, a network card, a communication module, or the like. The communication device 1004 may include a SIM card. Note that the above-described communication unit 130 may be implemented by the communication device 1004.

The input device 1005 is an input device (for example, a keyboard, a mouse, and the like) that receives an input from the outside. The output device 1006 is an output device (for example, a display, a speaker, and the like) that performs output to the outside. Note that the input device 1005 and the output device 1006 may be configured integrally (for example, a touch panel). Note that the input unit 140 and the output unit 150 described above may be implemented by the input device 1005 and the output device 1006, respectively.

In addition, the respective devices such as the processor 1001 and the memory 1002 are connected to each other by a bus 1008 for communicating information. The bus 1007 may be configured with a single bus or may be configured with different buses between devices.

In addition, the allocation device 10 or the like may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of the above-described hardware.

### (Modification)

Note that the terms described in the present disclosure and/or terms necessary for understanding the present disclosure may be replaced with terms having the same or similar meanings.

The information, the parameter, and the like described in the present disclosure may be represented by using an absolute value, may be represented by using a relative value from a predetermined value, or may be represented by using another piece of corresponding information. In addition, names used for parameters and the like in the present disclosure are not limited in any respect.

The information, signals, and the like described in the present disclosure may be represented using any one of a variety of different techniques. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

The information, the signals, and the like may be input and output via a plurality of network nodes. The input/output information, signals, and the like may be stored in a specific location (for example, a memory) or may be managed using a table. The input/output information, signals, and the like can be overwritten, updated, or added. The output information, signals, and the like may be deleted. The input information, signals, and the like may be transmitted to another device.

Furthermore, notification of predetermined information (for example, notification of "being X") is not limited to explicit notification, and may be performed implicitly (for example, by not notifying the predetermined information or by notifying another piece of information).

Software, whether referred to as software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

Software, an instruction, information, and the like may be transmitted and received via at least one of a transmission medium and a signal waveform. For example, when software is transmitted from a website, a server, or other remote sources using at least one of a wired technology (a coaxial cable, an optical fiber cable, a twisted pair, a digital subscriber line (DSL), or the like) and a wireless technology (an infrared ray, a microwave, and the like), at least one of the wired and wireless technologies is included within the definition of the transmission medium.

The terms "system" and "network" used in the present disclosure may be used interchangeably.

Each aspect/embodiment described in the present disclosure may be used alone, may be used in combination, or may be switched in execution. In addition, the order of the processing procedure, sequence, flowchart, and the like of each aspect/embodiment described in the present disclosure may be changed as long as there is no contradiction. For example, for the methods described in the present disclosure, elements of various steps are presented using an example order, and are not limited to the presented particular order.

As used in the present disclosure, the phrase "based on" does not mean "based only on" unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to the first and second elements do not imply that only two elements may be employed or that the first element must in any way precede the second element.

When the present disclosure uses the terms "include", "including", and variations thereof, such terms are intended to be inclusive in a manner similar to the term "comprising". Furthermore, the term "or" used in the present disclosure is intended not to be an exclusive OR.

In the present disclosure, for example, when articles such as a, an, and the in English are added by translation, the present disclosure may include a case in which a noun following such articles is a plural form.

In the present disclosure, "equal to or less than", "less than", "equal to or greater than", "more than", "equal to", and the like may be replaced with each other.

In the present disclosure, "of", "for", "regarding", "related to", "associated with", and the like may be replaced with each other.

Although the invention according to the present disclosure has been described in detail above, it is apparent to those skilled in the art that the invention according to the present disclosure is not limited to the embodiments described in the present disclosure. The invention according to the present disclosure can be implemented as modifications and variations without departing from the spirit and scope of the invention defined based on the description of the claims. Therefore, the description of the present disclosure is for the purpose of illustration and does not bring any restrictive meaning to the invention according to the present disclosure.

The present application is based on Japanese Patent Application No. 2022-090751 filed on June 3, 2022. All contents are included herein.

## Claims

1. An advertisement material allocation system comprising:
an acquisition unit configured to acquire setting information on allocation including information on a target value; and
a control unit configured to determine, based on the setting information, information indicating a correspondence relationship between each advertisement space and a brand to be allocated to each advertisement space, with respect to which brand advertisement material among a plurality of brands is to be allocated to each advertisement space,
wherein the control unit
determines information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and
determines, based on the information indicating the first correspondence relationship, information indicating a second correspondence relationship that minimizes a difference between a maximum value and a minimum value of the achievement rates for all brands under a condition that satisfies a second rule.

2. The advertisement material allocation system according to claim 1, wherein the second rule includes a constraint that the minimum value of the achievement rates for all brands in the information indicating the second correspondence relationship is equal to or greater than the minimum value of the achievement rates for all brands in the information indicating the first correspondence relationship.

3. The advertisement material allocation system according to claim 1, wherein the control unit determines, based on the information indicating the second correspondence relationship, information for a specific brand indicating a third correspondence relationship that minimizes at least one of a variation in the number of allocated advertisement spaces per day and the number of consecutive allocation spaces to a temporally adjacent program under a condition that satisfies a third rule.

4. An advertisement material allocation device comprising:
an acquisition unit configured to acquire setting information on allocation including information on a target value; and
a control unit configured to determine, based on the setting information, information indicating a correspondence relationship between each advertisement space and a brand to be allocated to each advertisement space, with respect to which brand advertisement material among a plurality of brands is to be allocated to each advertisement space,
wherein the control unit
determines information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and
determines, based on the information indicating the first correspondence relationship, information indicating a second correspondence relationship that minimizes a difference between a maximum value and a minimum value of the achievement rates for all brands under a condition that satisfies a second rule.

5. An advertisement material allocation method comprising:
a step of acquiring, by an advertisement material allocation device, setting information on allocation including information on a target value; and
a step of determining, by the advertisement material allocation device, based on the setting information, information indicating a correspondence relationship between each advertisement space and a brand to be allocated to each advertisement space, with respect to which brand advertisement material among a plurality of brands is to be allocated to each advertisement space,
wherein the step of determining includes
a step of determining, by the advertisement material allocation device, information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and
a step of determining, by the advertisement material allocation device, based on the information indicating the first correspondence relationship, information indicating a second correspondence relationship that minimizes a difference between a maximum value and a minimum value of the achievement rates for all brands under a condition that satisfies a second rule.

6. An advertisement material allocation program adapted to cause a computer to execute processing,
wherein the processing includes:
a step of acquiring setting information on allocation including information on a target value; and
a step of determining, based on the setting information, information indicating a correspondence relationship between each advertisement space and a brand to be allocated to each advertisement space, with respect to which brand advertisement material among a plurality of brands is to be allocated to each advertisement space, and
the step of determining includes
a step of determining information indicating a first correspondence relationship that maximizes a minimum value for all brands among achievement rates regarding a target rating point (TRP) for each brand under a condition that satisfies a first rule including a constraint that a gross rating point (GRP) or an individual GRP is equal to or greater than the target value, and
a step of determining, based on the information indicating the first correspondence relationship, information indicating a second correspondence relationship that minimizes a difference between a maximum value and a minimum value of the achievement rates for all brands under a condition that satisfies a second rule.
